# EUROPÄISCHE PATENTSCHRIFT

(11) **EP 3 659 827 B1**
(45) Veröffentlichungstag und Bekanntmachung des Hinweises auf die Patenterteilung: **23.06.2021**
(21) Anmeldenummer: 19201589.9
(22) Anmeldetag: 07.10.2019
(51) Int. Cl.: B60C 11/13, B60C 11/03

(54) **FAHRZEUGLUFTREIFEN AUFWEISEND EIN LAUFSTREIFENPROFIL MIT HINTERSCHNITT**
PNEUMATIC VEHICLE PNEUMATIC TYRE HAVING AN UNDERCUT TREAD
PNEUMATIQUES DE VÉHICULE COMPORTANT UN PROFIL DE BANDE DE ROULEMENT À UNE CONTRE-DÉPOUILLE

(30) Priorität: 26.11.2018 DE 102018220233
(43) Veröffentlichungstag der Anmeldung: 03.06.2020
(73) Patentinhaber: Continental Reifen Deutschland GmbH, 30165 Hannover (DE)
(72) Erfinder: Bauer, Claudia, 30165 Hannover (DE); Baus, Julian, 30165 Hannover (DE)
(74) Vertreter: Continental Corporation

(56) Entgegenhaltungen:
- EP-A1- 0 524 567
- WO-A1-2017/174927
- JP-A- 2016 159 797

## Beschreibung

Die Erfindung betrifft einen Fahrzeugluftreifen, insbesondere Winterreifen oder Ganzjahresreifen für einen Personenkraftwagen, mit einem Laufstreifenprofil mit zumindest einem radial erhabenen Profilblock, wobei der Profilblock von zumindest einer Profilrille begrenzt wird, welche eine erste Rillenflanke, welche eine Flanke des Profilblocks mitbildet, sowie eine der ersten Rillenflanke gegenüberliegende zweite Rillenflanke aufweist, wobei die zumindest eine Profilrille einen ersten Rillenabschnitt aufweist, der einen sich nach radial außen hin verjüngenden Querschnitt aufweist und wobei die erste Rillenflanke des ersten Rillenabschnitts einen negativen Flankenwinkel aufweist.

Fahrzeugreifen, insbesondere Fahrzeugluftreifen, werden mit einem Laufflächenprofil mit Profilrillen ausgestattet. Die Profilrillen dienen dazu, Wasser und Schnee von der Fahrbahn aufnehmen zu können, um auch bei nasser Fahrbahn den Kontakt zur Fahrbahnoberfläche beizubehalten. Im Falle von Aquaplaning kann so ein Aufschwimmen des Reifens vermieden werden. Gleichzeitig können bei Fahrten unter winterlichen Fahrbedingungen, insbesondere auf Schnee, kurze Brems- und Traktionswege erreicht werden. Durch Abrieb durch die Benutzung des Reifens verringert sich die Profiltiefe, wodurch sich das Rillenvolumen verringert. Hierdurch kann weniger Wasser und Schnee aufgenommen werden, wodurch sich die Reifeneigenschaften bezüglich Aquaplaning sowie beim Bremsen und beim Beschleunigen auf Schnee mit abnehmender Profiltiefe verschlechtern.

Um diesem Effekt entgegenzuwirken, ist es bekannt, Profilrillen so auszuführen, dass sich ihr Querschnitt senkrecht zur Längserstreckung der Profilrille zumindest teilweise nach radial außen hin verjüngt. Die Profilrille weist somit einen Hinterschnitt auf. Bei abnehmender Profiltiefe nimmt die Rillenbreite zu.

Ein solcher Hinterschnitt führt jedoch auch dazu, dass sich in der Reifenherstellung der profilierte Laufstreifen jedoch schlechter aus der Form löst. Auch reduziert ein solcher Hinterschnitt die Steifigkeit des Neureifens.

Ein Fahrzeugluftreifen mit den Merkmalen des Oberbegriffs von Anspruch 1 ist aus der WO2017/174927 A1 bekannt.

Aufgabe der vorliegenden Erfindung ist es somit, einen Fahrzeugluftreifen zur Verfügung zu stellen, der bei weiterhin guten Fahreigenschaften bei Fahrten unter winterlichen Fahrbedingungen eine gute Entformbarkeit in der Herstellung und eine verbesserte Steifigkeit des Neureifens aufweist.

Die Aufgabe wird gelöst mit den Merkmalen des unabhängigen Anspruchs 1.

Die zumindest eine Profilrille weist einen zweiten Rillenabschnitt auf, der einen sich nach radial innen hin verjüngenden Querschnitt aufweist und die erste Rillcnflankc des zweiten Rillcnabschnitts weist einen positiven Flankenwinkel auf.

Der Profilblock ist somit sowohl von dem ersten Rillenabschnitt, aufweisend einen sich nach radial außen hin verjüngenden Querschnitt, als auch von dem zweiten Rillenabschnitt, aufweisend eine erste Rillenflanke mit positivem Flankenwinkel, begrenzt.

Die vorteilhaften Eigenschaften eines Laufstreifenprofils mit Hinterschnitt bleiben somit erhalten. Gleichzeitig sind jedoch dadurch, dass die zumindest eine Profilrille auch einen zweiten Abschnitt mit einem sich nach radial innen hin verjüngenden Querschnitt aufweist, die Bereiche mit Hinterschnitt begrenzt, wodurch die Entformbarkeit verbessert ist.

Der gleiche Profilblock, der vom ersten Rillenabschnitt mit begrenzt wird, wird auch vom zweiten Rillenabschnitt begrenzt. Der positive Flankenwinkel der ersten Rillenflanke des zweiten Rillenabschnitts führt hierbei zu einer erhöhten Steifigkeit des Profilblocks im Neureifen.

Entformbarkeit und Steifigkeit des Neureifens können somit durch die Kombination aus erstem Rillenabschnitt und zweitem Rillenabschnitt innerhalb der zumindest einen Profilrille begrenzend den Profilblock verbessert werden.
Gleichzeitig kann durch die Kombination aus einer ersten Rillenflanke mit negativem Flankenwinkel und einer ersten Rillenflanke mit positiven Flankenwinkel die Veränderung der Größe der Kontaktfläche des Profilblocks mit der Fahrbahn mit abnehmender Profiltiefe verringert werden. Es ist somit ein Fahrzeugluftreifen zur Verfügung gestellt, der weiterhin gute Fahreigenschaften bei Fahrten unter winterlichen Fahrbedingungen sowie bei nasser Fahrbahn aufweist.

Der Flankenwinkel einer Rillenflanke einer Profilrille ist der Winkel, den die Flanke mit einer senkrecht auf eine Einhüllende des Laufstreifens stehenden Richtung einschließt. Der Flankenwinkel ist positiv, wenn sich die Flanke von radial innen nach radial außen von der ihr gegenüberliegenden Flanke derselben Rille wegneigt. Der Flankenwinkel ist negativ, wenn sich die Flanke von radial innen nach radial außen der ihr gegenüberliegenden Flanke derselben Rille zuneigt.

Zweckmäßig ist es, wenn der erste Rillenabschnitt auf seiner gesamten Erstreckungslänge L1 einen negativen Flankenwinkel aufweist. Zweckmäßig ist es auch, wenn der zweite Rillenabschnitt auf seiner gesamten Erstreckungslänge L2 einen positiven Flankenwinkel aufweist. Hierdurch kann der jeweilige vorteilhafte Effekt über die gesamte jeweilige Erstreckungslänge erzielt werden.

Der Querschnitt einer Rille ist senkrecht zur Längserstreckungsrichtung der Rille zu wählen.

In einer vorteilhaften Ausführungsform gehören der erste Rillenabschnitt und der zweite Rillenabschnitt derselben Profilrille der zumindest einen Profilrille an. Eine Profilrille kann den Profilblock in einer Richtung begrenzen.

Ein Profilblock kann von zwei Querrillen und einer oder zwei Umfangsrillen begrenzt sein.

Eine Umfangsrille ist eine Profilrille, die im Wesentlichen in Umfangsrichtung verläuft. Eine Umfangsrille kann den Profilblock im Wesentlichen in axialer Richtung begrenzen. Die Umfangsrille kann dabei um den Reifen umlaufend geschlossen angeordnet sein und somit mehrere Profilblöcke begrenzen.
Beide Rillenabschnitte können derselben Umfangsrille angehören. Diese Ausführungsform ist besonders bevorzugt. Eine Umfangsrille ist eine Profilrille, die im Wesentlichen in Umfangsrichtung verläuft. Eine Umfangsrille kann den Profilblock im Wesentlichen in axialer Richtung begrenzen. Die Umfangsrille kann dabei um den Reifen umlaufend geschlossen angeordnet sein und somit mehrere Profilblöcke begrenzen.

Eine Querrille ist eine Profilrille, die im Wesentlichen quer zur Umfangsrichtung verläuft. Eine Querrille kann den Profilblock im Wesentlichen in Umfangsrichtung begrenzen. Beide Abschnitte können aber auch derselben Querrille angehören. Zweckmäßig ist es, wenn der Profilblock zwei Querrillen aufweist und beide Querrillen wie beschrieben ausgeführt sind.

Gehören beide Rillenabschnitt derselben Profilrille an, so kann die Verringerung der Steifigkeit des Profilblocks im Bereich des ersten Rillenabschnitts durch die Erhöhung der Steifigkeit des Profilblocks durch den positiven Flankenwinkel des zweiten Rillenabschnitts besonders effektiv kompensiert werden.

In einer weiteren vorteilhaften Ausführungsform ist eine längliche Erstreckung des ersten Rillenabschnitts größer als eine längliche Erstreckung des zweiten Rillenabschnitts. Hierdurch kann erreicht werden, dass die gesamte Rillenöffhungsfläche des ersten Rillenabschnitts zusammen mit dem zweiten Rillenabschnitt bei zunehmender Profiltiefe vergrößert wird. Hierdurch können auch bei abnehmender Profiltiefe vorteilhafte Fahreigenschaften unter winterlichen Fahrbedingungen erreicht werden. Gleichzeitig kann eine ausreichende Stützung und Versteifung des Blocks bereits doch einen solchen im Vergleich zum ersten Rillenbereich kürzeren zweiten Rillenbereich erreicht werden.

Vorteilhaft ist es auch, wenn eine Längserstreckungsrichtung des ersten Rillenabschnitts eine andere Ausrichtung aufweist als eine Längserstreckungsrichtung des zweiten Rillenabschnitts. Der erste Rillenabschnitt und/oder der zweite Rillenabschnitt kann dabei gerade ausgeführt sein. Jeder der beiden Rillenabschnitte kann dabei in einer für seine Funktion vorteilhaften Ausrichtung ausgeführt sein. Beide Abschnitte können dabei derselben Rille angehören. Bevorzugt schließen die Ausrichtungen der beiden Rillenabschnitte einen Winkel von maximal 45° ein. So kann der Profilblock besonders vorteilhaft in einer Richtung begrenzt werden.

Erfindungsgemäss weist die erste Rillenflanke, bevorzugt die erste und die zweite Rillenflanke, des ersten Rillenabschnitts einen negativen Flankenwinkel von -8° bis -2°, bevorzugt -4° bis -2°, besonders bevorzugt -3,4° bis -3°, auf. Ein solcher Flankenwinkel ermöglicht auch bei abnehmender Profiltiefe noch eine vorteilhafte Aufnahmefähigkeit der Profilrille von Wasser und Schnee, wobei gleichzeitig akzeptabler Ausformbarkeit.

Vorteilhaft ist es weiter, wenn die erste Rillenflanke, bevorzugt die erste und die zweite Rillenflanke, des zweiten Rillenabschnitts einen positiven Flankenwinkel von 2° bis 8°, bevorzugt 4° bis 6°, besonders bevorzugt 4,5° bis 5,5°, aufweist. Hierdurch kann eine vorteilhafte Stützwirkung und Verbesserung der Steifigkeit des Profilblocks erreicht werden.

Eine besonders einfache Ausführungsform ergibt sich dadurch, dass der negative Flankenwinkel und/oder der positive Flankenwinkel über einen Teil der Erstreckung des jeweiligen Rillenabschnitts konstant ist. Hierdurch ergibt sich eine besonders einfache Form des formgebenden Mittels in der Herstellung des Laufstreifenprofils.

Eine einfache Ausführungsform ist auch dadurch gegeben, dass der negative Flankenwinkel und/oder der positive Flankenwinkel zumindest über einen Teil der Tiefenerstreckung des jeweiligen Rillenabschnitts konstant ist. Hierdurch ergibt sich eine besonders einfache Form des formgebenden Mittels in der Herstellung des Laufstreifenprofils. Bevorzugt geht die Rillenflanke am radial inneren Ende der Rillenflanke mit einer Krümmung in einen Rillengrund der Rillenflanke über. Radial außerhalb der Krümmung kann die Rillenflanke einen konstanten Flankenwinkel aufweisen.

Noch eine vorteilhafte einfache Ausführungsform ist dadurch gegeben, dass die erste Rillenflanke und die zweite Rillenflanke des ersten Rillenabschnitts und/oder die erste Rillenflanke und die zweite Rillenflanke des zweiten Rillenabschnitts zumindest abschnittsweise zueinander symmetrisch ausgebildet sind.

Der erste Rillenabschnitt und der zweite Rillenabschnitt können direkt aneinander angrenzend, d.h. kontaktieren, ausgebildet sein.

Die zumindest eine Profilrille kann aber auch ein Übergangsbereich zwischen den beiden Rillenabschnitt aufweisen.

Hierzu ist es vorteilhaft, wenn die zumindest eine Profilrille einen dritten Rillenabschnitt aufweist, welcher an einem ersten Längsende des dritten Rillenabschnitts an den ersten Rillenabschnitt und an einem zweiten Längsende des dritten Rillenabschnitts an den zweiten Rillenabschnitt angrenzt und diese miteinander verbindet, wenn die erste Rillenflanke des dritten Rillenabschnitts einen dritten Flankenwinkel aufweisen, der sich entlang der Längserstreckung des dritten Rillenabschnitts in einer vom ersten Längsende zum zweiten Längsende weisenden Richtung kontinuierlich und/oder diskontinuierlich ändert.

Für den Einsatz unter winterlichen Fahrbedingungen ist es zweckmäßig, wenn die Tiefe der Profilrille im Neuzustand 5 mm bis 10 mm aufweist.
Für den Einsatz unter winterlichen Fahrbedingungen ist es weiter zweckmäßig, wenn der Profilblock Feineinschnitte aufweist.
Der Profilblock kann von weiteren Profilrillen begrenzt sein.

Zweckmäßig ist es, wenn das Laufstreifenprofil mehrere solcher Profilblöcke aufweist.

Vorteilhaft ist es dabei, wenn in einer Richtung, insbesondere in Umfangsrichtung und/oder in axialer Richtung, eine Abfolge solcher Profilblöcke angeordnet ist.

Vorteilhaft ist es auch, wenn die zumindest eine Profilrille auf 1% bis 49%, bevorzugt auf 10% bis 40%, besonders bevorzugt auf 15% bis 30%, ihrer Gesamtlänge einen sich nach radial innen hin verjüngenden Querschnitt aufweist und wenn die zumindest eine Profilrille auf mindestens 50% ihrer Gesamtlänge einen sich nach radial außen hin verjüngenden Querschnitt aufweist. Die Gesamtlänge der Profilrille kann als die Summe der Einzellängen aller gerader und gekrümmter Profilabschnitte berechnet werden.

Vorteilhaft ist es weiter, wenn beim Neureifen die Rillenbreite B des ersten Rillenabschnitts 1mm bis 20 mm, bevorzugt 2 mm bis 10 mm, besonders bevorzugt 4 mm bis 8 mm, beträgt.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen Fahrzeugluftreifen aufweisend einen profilierten Laufstreifen,
Fig. 2 eine Draufsicht auf ein Laufstreifenprofil,
Fig. 3 einen Querschnitt eines ersten Rillenabschnitts;
Fig. 4 einen Querschnitt eines zweiten Rillenabschnitts.

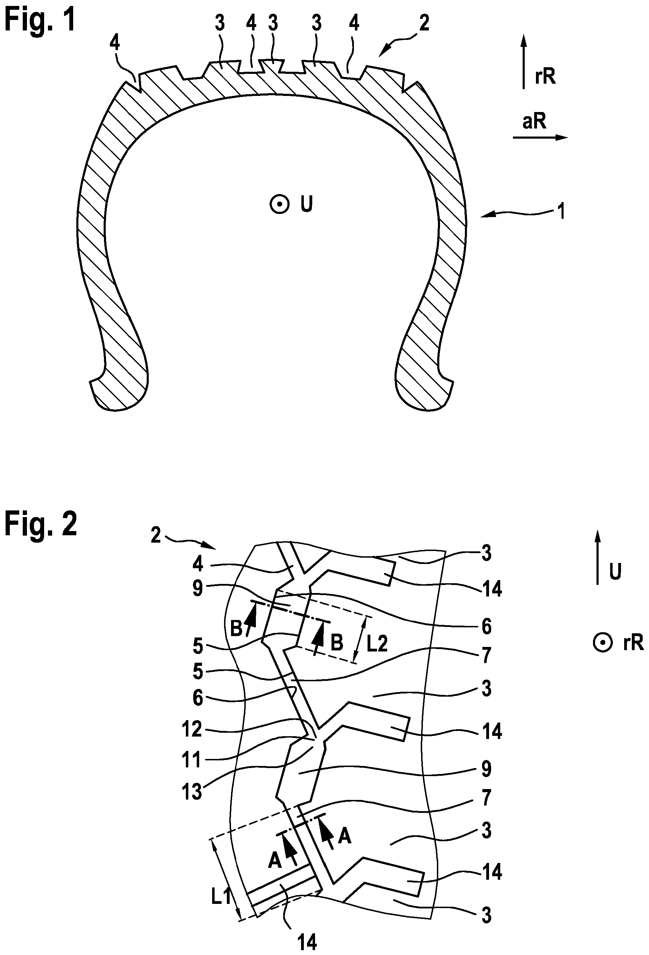

Die Figur 1 zeigt einen Fahrzeugluftreifen 1, insbesondere Winterreifen oder Ganzjahresreifen für einen Personenkraftwagen, mit einem Laufstreifenprofil 2 mit zumindest einem radial erhabenen Profilblock 3. Der Profilblock 3 ist von zumindest einer Profilrille 4,14 begrenzt.

Die Figur 2 zeigt eine Draufsicht auf ein Laufstreifenprofil 2 eines Fahrzeugluftreifens 1 gemäß der Erfindung. Es kann sich dabei um den Fahrzeugluftreifen aus Figur 1 handeln. Das Laufstreifenprofil 2 weist ein Profilblock 3 auf, welcher von zumindest einer Profilrille 4 begrenzt ist. Die Profilrille 4 weist eine erste Rillenflanke 5 auf, welche eine Flanke des Profilblocks 3 mitbildet. Weiter weist die Profilrille 4,14 eine zweite Rillenflanke 6 auf, die der ersten Rillenflanke 5 gegenüberliegt.

Die zumindest eine Profilrille 4 weist einen ersten Rillenabschnitt 7 auf, der einen sich nach radial außen hin verjüngenden Querschnitt aufweist. Weiter weist die erste Rillenflanke 5 des ersten Rillenabschnitts 7 einen negativen Flankenwinkel 8 auf.

Die zumindest eine Profilrille 4 weist einen zweiten Rillenabschnitt 9 auf. Der zweite Rillenabschnitt 9 weist einen sich nach radial innen hin verjüngen Querschnitt auf. Weiter ist die erste Rillenflanke 5 des zweiten Rillenabschnitts 9 mit einem positiven Flankenwinkel 10 ausgebildet.

Der erste Rillenabschnitt 7 und der zweite Rillenabschnitt 9 gehören derselben Profilrille 4 an. Es handelt es sich um eine Umfangsrille. Es könnte sich aber auch um eine Querrille 14 handeln. Der erste Rillenabschnitt 7 weist eine längliche Erstreckung L1 auf, die größer ist als die längliche Erstreckung L2 des zweiten Rillenabschnitts 9. Beide Rillenabschnitte 7,9 sind weitgehend geradlinig ausgebildet. Deutlich ist erkennbar, dass eine Längserstreckungsrichtung des ersten Rillenabschnitts 7 eine andere Ausrichtung aufweist als eine Längserstreckungsrichtung des zweiten Rillenabschnitts 9.
Der erste Rillenabschnitt 7 weist auf seiner gesamten länglichen Erstreckungslänge L1 einen negativen Flankenwinkel 8 auf. Der zweite Rillenabschnitt 9 weist auf seiner gesamten länglichen Erstreckungslänge L2 einen positiven Flankenwinkel 10 auf.

Der negative Flankenwinkel 8 und/oder der positive Flankenwinkel 10 sind zumindest über einen Teil der Erstreckung des jeweiligen Rillenabschnitts 7, 9 konstant.

Für einen Übergang zwischen den Rillenabschnitten 7, 9 ist zu sehen, dass die zumindest eine Profilrille 4 einen dritten Rillenabschnitt 11 aufweist, welcher an einem ersten Längsende 12 des dritten Rillenabschnitts an den ersten Rillenabschnitt 7 und an einem zweiten Längsende 13 des dritten Rillenabschnitts an den zweiten Rillenabschnitt 9 angrenzt und diese miteinander verbindet, dass die erste Rillenflanke des dritten Rillenabschnitts einen dritten Flankenwinkel aufweisen, der sich entlang der Längserstreckung des dritten Rillenabschnitts in einer vom ersten Längsende zum zweiten Längsende weisenden Richtung kontinuierlich und/oder diskontinuierlich ändert.

Das Laufstreifenprofil weist in Umfangsrichtung eine Abfolge solcher Profilblöcke 3 auf.

Die Profilblöcke 3 sind von einer Umfangsrille 4 und zwei Querrillen 14 begrenzt. Auf einer der Umfangsrille 4 gegenüberliegenden Seite des Profilblocks 3 läuft dieser in die Schulter des Reifens aus. Erfindungsgemäß könnte es sich aber auch um einen Profilblock handeln, der noch von einer weiteren Umfangsrille begrenzt ist. Erfindungsgemäß könnten auch zusätzlich oder alternative eine oder beide Querrillen 14 einen ersten und einen zweiten Rillenabschnitt 7, 9 aufweisen.

Die zumindest eine Profilrille 4,14 kann auf 1% bis 49%, bevorzugt auf 10% bis 40%, besonders bevorzugt auf 15% bis 30%, ihrer Gesamtlänge einen sich nach radial innen hin verjüngenden Querschnitt aufweisen. Ebenso kann die zumindest eine Profilrille 4,14 auf mindestens 50% ihrer Gesamtlänge einen sich nach radial außen hin verjüngenden Querschnitt aufweisen.

Beim Neureifen kann die Rillenbreite B des ersten Rillenabschnitts 7 1mm bis 20 mm, bevorzugt 2 mm bis 10 mm, besonders bevorzugt 4 mm bis 8 mm, betragen.

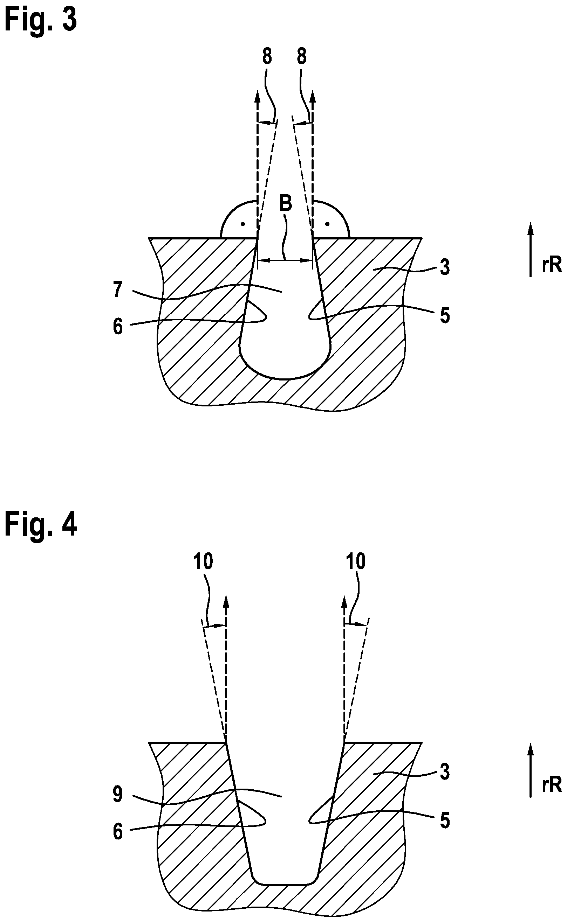

Die Figur 3 zeigt einen Querschnitt durch den ersten Rillenabschnitt 7 entlang der Linie AA aus Figur 2. Der Querschnitt verjüngt sich nach radial außen. Deutlich ist erkennbar, dass die Rillenflanken 5,6 einen negativen Flankenwinkel 8 aufweisen. Der Flankenwinkel ist negativ, da sich die Flanke 5 nach radial außen hin zu der ihr gegenüberliegenden Flanke 6 derselben Rille zuneigt.
Insbesondere beträgt der Flankenwinkel 8 der ersten Rillenflanke 5, bevorzugt der ersten und der zweiten Rillenflanke 5,6 , des ersten Rillenabschnitts 7 einen negativen Flankenwinkel 10 von -8° bis -2°, bevorzugt -4° bis -2°, besonders bevorzugt -3,4° bis -3°.

Die Figur 4 zeigt einen Querschnitt durch den ersten Rillenabschnitt sieben entlang der Linie BB aus Figur 2. Der Querschnitt verjüngt sich nach radial innen. Deutlich ist erkennbar, dass die Rillenflanke 5 einen positiven Flankenwinkel 10 aufweist. Der Flankenwinkel ist positiv, da sich die Flanke 5 nach radial außen hin von der ihr gegenüberliegenden Flanke 6 derselben Rille wegneigt
Insbesondere beträgt der Flankenwinkel 10 der ersten Rillenflanke 5, bevorzugt der ersten und der zweiten Rillenflanke, des zweiten Rillenabschnitts 9 einen positiven Flankenwinkel 10 von 2° bis 8°, bevorzugt 4° bis 6°, besonders bevorzugt 4,5° bis 5,5°.

Wie in den Figuren 3 und 4 gezeigt, kann der negative Flankenwinkel 8 und/oder der positive Flankenwinkel 10 zumindest über einen Teil der Tiefenerstreckung des jeweiligen Rillenabschnitts 7,9 konstant sein. Ebenso ersichtlich ist, dass die erste Rillenflanke 5 und die zweite Rillenflanke 6 des ersten Rillenabschnitts 7 und/oder die erste Rillenflanke und die zweite Rillenflanke des zweiten Rillenabschnitts 9 zumindest abschnittsweise zueinander symmetrisch ausgebildet sein kann.

### Bezugszeichenliste

### (Teil der Beschreibung)

1 Fahrzeugluftreifen
2 Laufstreifenprofil
3 Profilblock
4 Umfangsprofilrille
5 erste Rillenflanke
6 zweite Rillenflanke
7 erster Rillenabschnitt
8 negativer Flankenwinkel
9 zweiter Rillenabschnitt
10 positiver Flankenwinkel
11 dritter Rillenabschnitt
12 erstes Längsende
13 zweites Längsende
14 Querrille
B Breite
L1 Länge
L2 Länge
U Umfangsrichtung
rR radiale Richtung
aR axiale Richtung

## Patentansprüche

1. Fahrzeugluftreifen (1), insbesondere Winterreifen oder Ganzjahresreifen für einen Personenkraftwagen, mit einem Laufstreifenprofil (2) mit zumindest einem radial erhabenen Profilblock (3),
• wobei der Profilblock (3) von zumindest einer Profilrille (4,14) begrenzt wird, welche eine erste Rillenflanke (5), welche eine Flanke des Profilblocks mitbildet, sowie eine der ersten Rillenflanke (5) gegenüberliegende zweite Rillenflanke (6) aufweist,
• wobei die zumindest eine Profilrille (4,14) einen ersten Rillenabschnitt (7) aufweist, der einen sich nach radial außen hin verjüngenden Querschnitt aufweist und
• wobei die erste Rillenflanke (5) des ersten Rillenabschnitts (7) einen negativen Flankenwinkel (8) aufweist,
• wobei die zumindest eine Profilrille (4,14) einen zweiten Rillenabschnitt (9) aufweist, der einen sich nach radial innen hin verjüngenden Querschnitt aufweist und
• wobei die erste Rillenflanke (5) des zweiten Rillenabschnitts (9) einen positiven Flankenwinkel (10) aufweist,
• wobei der Flankenwinkel (8, 10) einer Rillenflanke (5, 6) einer Profilrille (4,14) der Winkel ist, den die Flanke (5, 6) mit einer senkrecht auf eine Einhüllende des Laufstreifens stehenden Richtung einschließt und wobei der Flankenwinkel (10) positiv ist, wenn sich die Flanke von radial innen nach radial außen von der ihr gegenüberliegenden Flanke derselben Rille wegneigt und wobei der Flankenwinkel (8) negativ ist, wenn sich die Flanke von radial innen nach radial außen der ihr gegenüberliegenden Flanke derselben Rille (4,14) zuneigt,
**dadurch gekennzeichnet, dass**
• die erste Rillenflanke (5) des ersten Rillenabschnitts (7) einen negativen Flankenwinkel (8) von -8° bis -2°, bevorzugt -4° bis -2°, besonders bevorzugt -3,4° bis -3°, aufweist.

2. Fahrzeugluftreifen (1) nach Anspruch 1, **dadurch gekennzeichnet, dass** der erste Rillenabschnitt (7) und der zweite Rillenabschnitt (9) derselben Profilrille (4,14), insbesondere derselben Umfangsrille (4) oder derselben Querrille (14), angehören.

3. Fahrzeugluftreifen (1) nach einem oder mehreren der vorhergehenden Ansprüche, **dadurch gekennzeichnet, dass** eine längliche Erstreckung des ersten Rillenabschnitts (7) größer ist als eine längliche Erstreckung des zweiten Rillenabschnitts (9).

4. Fahrzeugluftreifen (1) nach einem oder mehreren der vorhergehenden Ansprüche, **dadurch gekennzeichnet, dass** eine Längserstreckungsrichtung des ersten Rillenabschnitts (7) andere Ausrichtung aufweist als eine Längserstreckungsrichtung des zweiten Rillenabschnitts (9).

5. Fahrzeugluftreifen (1) nach einem oder mehreren der vorhergehenden Ansprüche, **dadurch gekennzeichnet, dass** die erste Rillenflanke (5) und die zweite Rillenflanke (6) des ersten Rillenabschnitts (7) einen negativen Flankenwinkel (8) von -8° bis - 2°, bevorzugt -4° bis -2°, besonders bevorzugt -3,4° bis -3°, aufweisen.

6. Fahrzeugluftreifen (1) nach einem oder mehreren der vorhergehenden Ansprüche, **dadurch gekennzeichnet, dass** die erste Rillenflanke (5), bevorzugt die erste Rillenflanke (5) und die zweite Rillenflanke (6), des zweiten Rillenabschnitts (9) einen positiven Flankenwinkel (10) von 2° bis 8°, bevorzugt 4° bis 6°, besonders bevorzugt 4,5° bis 5,5°, aufweisen.

7. Fahrzeugluftreifen (1) nach einem oder mehreren der vorhergehenden Ansprüche, **dadurch gekennzeichnet, dass** der negative Flankenwinkel (8) und/oder der positive Flankenwinkel (10) zumindest über einen Teil der Erstreckung des jeweiligen Rillenabschnitts konstant ist.

8. Fahrzeugluftreifen (1) nach einem oder mehreren der vorhergehenden Ansprüche, **dadurch gekennzeichnet, dass** der negative Flankenwinkel (8) und/oder der positive Flankenwinkel (10) zumindest über einen Teil der Tiefenerstreckung des jeweiligen Rillenabschnitts konstant ist.

9. Fahrzeugluftreifen (1) nach einem oder mehreren der vorhergehenden Ansprüche, **dadurch gekennzeichnet, dass** die erste Rillenflanke (5) und die zweite Rillenflanke (6) des ersten Rillenabschnitts (7) und/oder die erste Rillenflanke (5) und die zweite Rillenflanke (6) des zweiten Rillenabschnitts (9) zumindest abschnittsweise zueinander symmetrisch ausgebildet sind.

10. Fahrzeugluftreifen (1) nach einem oder mehreren der vorhergehenden Ansprüche, **dadurch gekennzeichnet, dass** die zumindest eine Profilrille (4,14) einen dritten Rillenabschnitt (11) aufweist, welcher an einem ersten Längsende (12) des dritten Rillenabschnitts (11) an den ersten Rillenabschnitt (7) und an einem zweiten Längsende (13) des dritten Rillenabschnitts (11) an den zweiten Rillenabschnitt (9) angrenzt und diese miteinander verbindet, dass die erste Rillenflanke (5) des dritten Rillenabschnitts (11) einen dritten Flankenwinkel aufweisen, der sich entlang der Längserstreckung des dritten Rillenabschnitts (11) in einer vom ersten Längsende (12) zum zweiten Längsende (13) weisenden Richtung kontinuierlich und/oder diskontinuierlich ändert.

11. Fahrzeugluftreifen (1) nach einem oder mehreren der vorhergehenden Ansprüche, **dadurch gekennzeichnet, dass** in einer Richtung, insbesondere in Umfangsrichtung U und/oder in axialer Richtung aR, eine Abfolge solcher Profilblöcke (3) angeordnet ist.

12. Fahrzeugluftreifen (1) nach einem oder mehreren der vorhergehenden Ansprüche, **dadurch gekennzeichnet, dass** die zumindest eine Profilrille (4,14) auf 1% bis 49%, bevorzugt auf 10% bis 40%, besonders bevorzugt auf 15% bis 30%, ihrer Gesamtlänge einen sich nach radial innen hin verjüngenden Querschnitt aufweist und dass die zumindest eine Profilrille auf mindestens 50% ihrer Gesamtlänge einen sich nach radial außen hin verjüngenden Querschnitt aufweist.

13. Fahrzeugluftreifen (1) nach einem oder mehreren der vorhergehenden Ansprüche, **dadurch gekennzeichnet, dass** bei einem Neureifen die Rillenbreite B des ersten Rillenabschnitts (7) 1mm bis 20 mm, bevorzugt 2 mm bis 10 mm, besonders bevorzugt 4 mm bis 8 mm, beträgt.

## Claims

1. Pneumatic vehicle tyre (1), in particular winter tyre or all-year tyre, for a passenger car, comprising a tread profile (2) with at least one radially raised profile block (3),
• wherein the profile block (3) is delimited by at least one profile groove (4, 14), which has a first groove flank (5), which is involved in forming a flank of the profile block, and also a second groove flank (6), opposite the first groove flank (5),
• wherein the at least one profile groove (4, 14) has a first groove portion (7), which has a radially outwardly tapering cross section, and
• wherein the first groove flank (5) of the first groove portion (7) has a negative flank angle (8),
• wherein the at least one profile groove (4, 14) has a second groove portion (9), which has a radially inwardly tapering cross section, and
• wherein the first groove flank (5) of the second groove portion (9) has a positive flank angle (10),
• wherein the flank angle (8, 10) of a groove flank (5, 6) of a profile groove (4, 14) is the angle that the flank (5, 6) includes with a direction perpendicular to an envelope of the tread and wherein the flank angle (10) is positive if the flank is inclined away from the flank of the same groove opposite it from radially inside to radially outside and wherein the flank angle (8) is negative if the flank is inclined towards the flank of the same groove (4, 14) opposite it from radially inside to radially outside,
**characterized in that**
• the first groove flank (5) of the first groove portion (7) has a negative flank angle (8) of -8° to - 2°, preferably -4° to -2°, particularly preferably -3.4° to -3°.

2. Pneumatic vehicle tyre (1) according to Claim 1, **characterized in that** the first groove portion (7) and the second groove portion (9) belong to the same profile groove (4, 14), in particular the same circumferential groove (4) or the same transverse groove (14).

3. Pneumatic vehicle tyre (1) according to one or more of the preceding claims, **characterized in that** a longitudinal extent of the first groove portion (7) is greater than a longitudinal extent of the second groove portion (9).

4. Pneumatic vehicle tyre (1) according to one or more of the preceding claims, **characterized in that** the direction of the longitudinal extent of the first groove portion (7) has a different alignment than a direction of the longitudinal extent of the second groove portion (9) .

5. Pneumatic vehicle tyre (1) according to one or more of the preceding claims, **characterized in that** the first groove flank (5) and the second groove flank (6) of the first groove portion (7) have a negative flank angle (8) of -8° to -2°, preferably -4° to -2°, particularly preferably -3.4° to -3°.

6. Pneumatic vehicle tyre (1) according to one or more of the preceding claims, **characterized in that** the first groove flank (5), preferably the first groove flank (5) and the second groove flank (6), of the second groove portion (9) have a positive flank angle (10) of 2° to 8°, preferably 4° to 6°, particularly preferably 4.5° to 5.5°.

7. Pneumatic vehicle tyre (1) according to one or more of the preceding claims, **characterized in that** the negative flank angle (8) and/or the positive flank angle (10) is constant, at least over part of the extent of the respective groove portion.

8. Pneumatic vehicle tyre (1) according to one or more of the preceding claims, **characterized in that** the negative flank angle (8) and/or the positive flank angle (10) is constant, at least over part of the extent of the depth of the respective groove portion.

9. Pneumatic vehicle tyre (1) according to one or more of the preceding claims, **characterized in that** the first groove flank (5) and the second groove flank (6) of the first groove portion (7) and/or the first groove flank (5) and the second groove flank (6) of the second groove portion (9) are formed at least in certain portions symmetrically in relation to one another.

10. Pneumatic vehicle tyre (1) according to one or more of the preceding claims, **characterized in that** the at least one profile groove (4, 14) has a third groove portion (11), which at a first longitudinal end (12) of the third groove portion (11) adjoins the first groove portion (7) and at a second longitudinal end (13) of the third groove portion (11) adjoins the second groove portion (9) and connects them to one another, **in that** the first groove flank (5) of the third groove portion (11) has a third flank angle, which changes continuously and/or discontinuously along the longitudinal extent of the third groove portion (11) in a direction pointing from the first longitudinal end (12) to the second longitudinal end (13).

11. Pneumatic vehicle tyre (1) according to one or more of the preceding claims, **characterized in that** a series of such profile blocks (3) are arranged in one direction, in particular in the circumferential direction U and/or in the axial direction aR.

12. Pneumatic vehicle tyre (1) according to one or more of the preceding claims, **characterized in that** the at least one profile groove (4, 14) has over 1% to 49%, preferably over 10% to 40%, particularly preferably over 15% to 30%, of its overall length a radially inwardly tapering cross section and **in that** the at least one profile groove has over at least 50% of its overall length a radially outwardly tapering cross section.

13. Pneumatic vehicle tyre (1) according to one or more of the preceding claims, **characterized in that**, on a new tyre, the groove width B of the first groove portion (7) is 1 mm to 20 mm, preferably 2 mm to 10 mm, particularly preferably 4 mm to 8 mm.

## Revendications

1. Pneumatique de véhicule (1), en particulier pneumatique d'hiver ou pneumatique quatre saisons pour une voiture particulière, comprenant une sculpture de bande de roulement (2) dotée d'au moins un bloc de sculpture (3) radialement en relief,
• le bloc de sculpture (3) étant délimité par au moins une rainure de sculpture (4, 14) qui présente un premier flanc de rainure (5) formant conjointement un flanc du bloc de sculpture ainsi qu'un deuxième flanc de rainure (6) opposé au premier flanc de rainure (5),
• ladite au moins une rainure de sculpture (4, 14) présentant une première partie de rainure (7) qui présente une section transversale s'amincissant radialement vers l'extérieur, et
• le premier flanc de rainure (5) de la première partie de rainure (7) présentant un angle de flanc négatif (8),
• ladite au moins une rainure de sculpture (4, 14) présentant une deuxième partie de rainure (9) qui présente une section transversale s'amincissant radialement vers l'intérieur, et
• le premier flanc de rainure (5) de la deuxième partie de rainure (9) présentant un angle de flanc positif (10),
• l'angle de flanc (8, 10) d'un flanc de rainure (5, 6) d'une rainure de sculpture (4, 14) étant l'angle que le flanc (5, 6) forme avec une direction perpendiculaire à une enveloppante de la bande de roulement, et l'angle de flanc (10) étant positif si le flanc s'incline radialement de l'intérieur vers l'extérieur en s'éloignant du flanc opposé de la même rainure, et l'angle de flanc (8) étant négatif si le flanc s'incline radialement de l'intérieur vers l'extérieur en direction du flanc opposé de la même rainure (4, 14),
**caractérisé en ce que**
• le premier flanc de rainure (5) de la première partie de rainure (7) présente un angle de flanc (8) négatif de -8° à -2°, de préférence de -4° à -2°, de plus grande préférence de -3,4° à -3°.

2. Pneumatique de véhicule (1) selon la revendication 1, **caractérisé en ce que** la première partie de rainure (7) et la deuxième partie de rainure (9) font partie de la même rainure de sculpture (4, 14), en particulier de la même rainure circonférentielle (4) ou de la même rainure transversale (14).

3. Pneumatique de véhicule (1) selon une ou plusieurs des revendications précédentes, **caractérisé en ce qu'**une extension longitudinale de la première partie de rainure (7) est supérieure à une extension longitudinale de la deuxième partie de rainure (9).

4. Pneumatique de véhicule (1) selon une ou plusieurs des revendications précédentes, **caractérisé en ce qu'**une direction d'extension longitudinale de la première partie de rainure (7) présente une autre orientation qu'une direction d'extension longitudinale de la deuxième partie de rainure (9).

5. Pneumatique de véhicule (1) selon une ou plusieurs des revendications précédentes, **caractérisé en ce que** le premier flanc de rainure (5) et le deuxième flanc de rainure (6) de la première partie de rainure (7) présentent un angle de flanc négatif (8) de -8° à -2°, de préférence de -4° à -2°, de plus grande préférence de -3,4° à -3°.

6. Pneumatique de véhicule (1) selon une ou plusieurs des revendications précédentes, **caractérisé en ce que** le premier flanc de rainure (5), de préférence le premier flanc de rainure (5) et le deuxième flanc de rainure (6), de la deuxième partie de rainure (9) présentent un angle de flanc positif (10) de 2° à 8°, de préférence de 4° à 6°, de plus grande préférence de 4,5° à 5,5°.

7. Pneumatique de véhicule (1) selon une ou plusieurs des revendications précédentes, **caractérisé en ce que** l'angle de flanc négatif (8) et/ou l'angle de flanc positif (10) est/sont constant(s) au moins sur une partie de l'extension de la partie de rainure respective.

8. Pneumatique de véhicule (1) selon une ou plusieurs des revendications précédentes, **caractérisé en ce que** l'angle de flanc négatif (8) et/ou l'angle de flanc (10) positif est/sont constant(s) au moins sur une partie de l'extension en profondeur de la partie de rainure respective.

9. Pneumatique de véhicule (1) selon une ou plusieurs des revendications précédentes, **caractérisé en ce que** le premier flanc de rainure (5) et le deuxième flanc de rainure (6) de la première partie de rainure (7) et/ou le premier flanc de rainure (5) et le deuxième flanc de rainure (6) de la deuxième partie de rainure (9) sont réalisés en symétrie les uns par rapport aux autres au moins par endroits.

10. Pneumatique de véhicule (1) selon une ou plusieurs des revendications précédentes, **caractérisé en ce que** ladite au moins une rainure de sculpture (4, 14) présente une troisième partie de rainure (11) qui, au niveau d'une première extrémité longitudinale (12) de la troisième partie de rainure (11), est adjacente à la première partie de rainure (7), et qui, au niveau d'une deuxième extrémité longitudinale (13) de la troisième partie de rainure (11), est adjacente à la deuxième partie de rainure (9) et les relie l'une à l'autre, **en ce que** le premier flanc de rainure (5) de la troisième partie de rainure (11) présente un troisième angle de flanc qui varie de manière continue et/ou discontinue le long de l'extension longitudinale de la troisième partie de rainure (11) dans une direction orientée de la première extrémité longitudinale (12) à la deuxième extrémité longitudinale (13).

11. Pneumatique de véhicule (1) selon une ou plusieurs des revendications précédentes, **caractérisé en ce qu'**une série de ces blocs de sculpture (3) est disposée dans une direction, en particulier dans la direction circonférentielle U et/ou dans la direction axiale aR.

12. Pneumatique de véhicule (1) selon une ou plusieurs des revendications précédentes, **caractérisé en ce que** ladite au moins une rainure de sculpture (4, 14) présente sur 1 % à 49 %, de préférence sur 10 % à 40 %, de plus grande préférence sur 15 % à 30 % de sa longueur totale une section transversale s'amincissant radialement vers l'intérieur, et **en ce que** ladite au moins une rainure de sculpture présente sur au moins 50 % de sa longueur totale une section transversale s'amincissant radialement vers l'extérieur.

13. Pneumatique de véhicule (1) selon une ou plusieurs des revendications précédentes, **caractérisé en ce que** pour un pneumatique neuf, la largeur de rainure B de la première partie de rainure (7) mesure de 1 mm à 20 mm, de préférence de 2 mm à 10 mm, de plus grande préférence de 4 mm à 8 mm.
